# EUROPÄISCHE PATENTANMELDUNG

(11) **EP 3 159 830 A2**
(43) Veröffentlichungstag der Anmeldung: **26.04.2017**
(21) Anmeldenummer: 16002170.5
(22) Anmeldetag: 07.10.2016
(51) Int. Cl.: G06K 19/02, B42D 25/24

(54) **DOKUMENTENBUCHUMSCHLAG FÜR EIN WERT- UND SICHERHEITSDOKUMENT IN FORM EINES BUCHES UND VERFAHREN ZU DEREN HERSTELLUNG**

(30) Priorität: 20.10.2015 DE 102015013621
(71) Anmelder: Mühlbauer GmbH & Co. KG, 93426 Roding (DE)
(72) Erfinder: Michl, Thomas, 92278 Illschwang (DE); Ederer, Martin, 93483 Pösing (DE)
(74) Vertreter: Schmidt, Steffen J.

(57) **Zusammenfassung**

Dokumentenbuchumschlag für ein Wert- und Sicherheitsdokument, der eine Abdeckschicht und eine Transpondereinheit umfasst, wobei die Transpondereinheit eine Antennenträgerschicht, eine Antenne und einen die Antenne kontaktierenden Chip aufweist. Eine erste Seite der Antennenträgerschicht ist mit der Abdeckschicht verbunden, wobei die Antenne und der Chip auf einer der ersten Seite entgegengesetzten zweiten Seite der Antennenträgerschicht angeordnet sind. Der Dokumentenbuchumschlag umfasst weiterhin eine Kompensationsschicht, die mit einem Aufnahmeraum versehen ist, wobei die Transpondereinheit in dem Aufnahmeraum angeordnet ist. Die Kompensationsschicht ist mit der Abdeckschicht verbunden.

## Beschreibung

### Hintergrund

Hier wird ein Dokumentenbuchumschlag für ein Wert- und Sicherheitsdokument, insbesondere für ein Personaldokument in Form eines Buches, zum Beispiel ein Reisepass oder dergleichen, und ein Verfahren zum Herstellen desselben beschrieben. Weiterhin wird ein Wert- und Sicherheitsdokument mit einem derartigen Dokumentenbuchumschlag offenbart.

Wert- und Sicherheitsdokumente werden heute häufig bis auf Personalisierungsdaten zentral gefertigt und anschließend dezentral, zum Beispiel auf Meldestellen, bei Behörden oder in Unternehmen, die zur Ausstellung derartiger Wert- und Sicherheitsdokumente berechtigt sind, mit einer Personalisierung versehen. Bei der Personalisierung werden den jeweiligen Inhaber des Wert- und Sicherheitsdokumentes individuell bezeichnende Text-, Zahlen- und/oder Bilddaten (zum Beispiel Name und Anschrift des Inhabers, Geburtsdatum, Geburtsort, Foto des Inhabers, biometrische Daten des Inhabers, etc.) in das Wert- und Sicherheitsdokument eingetragen. Diese Text-, Zahlen- und/oder Bilddaten sind von einem Betrachter unmittelbar lesbar.

Um steigenden Sicherheitsanforderungen Rechnung zu tragen, werden zunehmend Transpondereinheiten in Wert- und Sicherheitsdokumente eingesetzt. Dies ermöglicht ein berührungsloses und automatisiertes Auslesen von auf einem Chip der Transpondereinheit gespeicherten Daten. Hierzu umfassen die Transpondereinheiten eine Antennenspule und ein den Chip aufweisendes Chipmodul, welche auf einem Trägersubtrat angeordnet sind. Die Antennenspule ist mit dem Chipmodul elektrisch leitend verbunden, wodurch ein berührungsloser Datenzugriff ermöglicht wird. Die Daten können in Form von Text-, Zahlen-, Bilddaten und/oder biometrischen Daten bereitgestellte sein.

Solche Transpondereinheiten in Wert- und Sicherheitsdokumente zu integrieren, die aus einer Vielzahl von Schichten aufgebaut sind, stellt besondere Anforderungen sowohl an die Transpondereinheiten als auch an die Wert- und Sicherheitsdokumente. Einerseits sollen die darin integrierten Transpondereinheiten das Gewicht und Format der Wert- und Sicherheitsdokumente möglichst wenig beeinflussen. Darüber hinaus soll die Handhabung der Wert- und Sicherheitsdokumente, beispielsweise das Blättern in solchen Dokumenten, möglichst wenig beeinträchtigt werden. Weiterhin ergeben sich aus deren Handhabung besondere mechanische Belastungen für die Wert- und Sicherheitsdokumente, insbesondere für die darin integrierten Transpondereinheiten.

Das Wert- und Sicherheitsdokument kann ein Passbuch sein, insbesondere ein Reisepass mit einem (Dokumenten-)Bucheinband. Auf einer Passbuchinnenseite des Bucheinbands weist das Dokument ein Vorsatzpapier und eine Vielzahl von Dokumentenseiten für Sichtvermerke auf, die in dem Bucheinband eingebunden sind.

### Stand der Technik

Aus dem Stand der Technik, wie beispielsweise aus der US 2010/0148487 A1, sind Passbücher bekannt, bei denen eine mit einem Transponder versehene Datenseite zusammen mit Dokumentenseiten in einen Passbuchumschlag eingebunden ist. Die Datenseite umfasst einen mehrschichtigen Körper in dem der Transponder, aufweisend eine Antenne und ein Chipmodul, auf einem Papier- oder Kunststoffsubstrat aufgebaut und zwischen Papier- oder papierähnlichen Schichten eingeklebt ist.

Ferner ist bekannt, einen Transponder auf eine Innenseite des Passbuchumschlags aufzukleben. Hierzu offenbart beispielsweise die JP 2005/096164 A ein Label mit einem Transponder, das auf einer Hälfte eines Passbuchumschlags angeordnet ist. Das Label umfasst eine Substratlage und eine Deckschicht, die mittels einer Klebstoffschicht miteinander verbunden sind. Eine Antenne und einen die Antenne kontaktierenden Chip sind zwischen der Substratlage und der Deckschicht angeordnet. Die Deckschicht weist dabei eine Ausnehmung auf, in der der Chip aufgenommen ist.

Die JP 2005/148516 A offenbart weiterhin einen einschichtigen Passbuchumschlag, in dem eine Transpondereinheit in einer Ausnehmung des Passbuchumschlags aufgenommen ist.

US 2012/0024960 A1 offenbart eine mehrlagige Vorrichtung, welche zur Aufnahme eines Chipmoduls zur drahtlosen Übertragung von Daten geeignet ist.

DE 10 2004 011 489 A1 offenbart ein Ausweisdokument in Buchform, wobei eine der Dokumentseiten einen integrierten Schaltkreis aufweist.

DE 10 2006 037 383 A1 offenbart ein Verfahren zur Herstellung eines Mehrschichtaufbaus sowie einen Mehrschichtaufbau für ein Identifikationsdokument, wobei eine Faserschicht zumindest teilweise in das Dokument einlaminiert ist.

DE 10 2008 022 016 A1 derselben Anmelderin offenbart ein RFID-Inlay für elektronische Identifikationsdokumente und ein Herstellungsverfahren hierfür.

DE 103 36 025 A1 derselben Anmelderin offenbart ein Vorrichtung und ein Verfahren zum Bedrucken einer Bahn, wobei die Vorrichtung mindestens eine Einrichtung zur Übertragung von einzelnen Transpondern oder Transponderteilen umfasst.

DE 10 2004 008 841 A1 offenbart ein Verfahren zur Herstellung einer Buchdeckeneinlage und eines buchartigen Wertdokuments sowie eine Buchdeckeneinlage und ein buchartiges Wertdokument.

### Zu lösendes Problem

Die Aufgabe besteht nun darin, ein Dokumentenbuchumschlag zum berührungslosen Auslesen von Daten für ein Wert- und Sicherheitsdokument bereitzustellen, der die Größe von Wert- und Sicherheitsdokumenten sowie deren Handhabung möglichst wenig beeinträchtigt und kostengünstig hergestellt werden kann. Ferner soll ein Wert- und Sicherheitsdokument mit einem derartigen Dokumentenbuchumschlag bereitgestellt werden. Eine weitere Aufgabe besteht darin, ein Verfahren zum Herstellen eines derartigen Dokumentenbuchumschlages anzugeben.

### Hier vorgestellte Lösung

Zur Lösung dieser Aufgaben wird ein Dokumentenbuchumschlag für ein Wert- und Sicherheitsdokument mit den Merkmalen nach Anspruch 1, ein Wert- und Sicherheitsdokument mit den Merkmalen nach Anspruch 12 sowie ein Verfahren zum Herstellen eines Dokumentenbuchumschlags mit den Merkmalen nach Anspruch 14 vorgeschlagen.

Der Dokumentenbuchumschlag für ein Wert- und Sicherheitsdokument umfasst eine Abdeckschicht und eine Transpondereinheit, die eine Antennenträgerschicht, eine Antenne und einen die Antenne kontaktierenden Chip aufweist. Eine erste Seite der Antennenträgerschicht ist mit der Abdeckschicht verbunden, wobei die Antenne und der Chip auf einer der ersten Seite entgegengesetzten zweiten Seite der Antennenträgerschicht angeordnet sind. Der Dokumentenbuchumschlag umfasst weiterhin eine Kompensationsschicht, die mit einem Aufnahmeraum versehen ist, wobei die Transpondereinheit in dem Aufnahmeraum angeordnet ist. Die Kompensationsschicht ist mit der Abdeckschicht verbunden.

Der hier beschriebene Dokumentenbuchumschlag für ein Wert- und Sicherheitsdokument umfasst einen weniger komplexen Aufbau, der im Vergleich zu bekannten Anordnungen mit wesentlich weniger Schichten auskommt. Entsprechend kann der vorliegende Dokumentenbuchumschlag wesentlich flacher ausgestaltet werden. Dies ermöglicht, dass die Auswirkungen auf die Biegesteifigkeit eines mit dem Dokumentbuchumschlag versehenen Wert- und Sicherheitsdokumentes möglichst klein gehalten werden können.

Der vorliegende Dokumentenbuchumschlag mit einer Kompensationsschicht und einer Abdeckschicht ermöglicht weiterhin eine Lösung des Zielkonflikts, einen Dokumentenbuchumschlag zum berührungslosen Auslesen von Daten bereitzustellen, der zum einen möglichst Widerstandsfähig ist und gleichzeitig eine flexible Ausgestaltung des Wert- und Sicherheitsdokumentes ermöglicht. Hierzu kann die Abdeckschicht des vorliegenden Dokumentenbuchumschlags besonders Widerstandsfähig sein, insbesondere gegenüber von außen auf das Wert- und Sicherheitsdokument wirkenden thermischen, chemischen und mechanischen Beanspruchungen, wie zum Beispiel Hitze, Feuchtigkeit, Abrieb und dergleichen. Demgegenüber kann die Kompensationsschicht derart bereitgestellt sein, dass die Biegesteifigkeit des Wert- und Sicherheitsdokumentes möglichst wenig beeinflusst und gleichzeitig die Aufnahme der Transpondereinheit begünstigt wird. Dabei kann die Kompensationsschicht beispielsweise ein Material aufweisen, das gut bearbeitbar ist, insbesondere hinsichtlich einer Materialabtragung zum Versehen der Kompensationsschicht mit dem Aufnahmeraum. Dies hat den weiteren vorteilhaften Effekt, dass der Dokumentenbuchumschlag kostengünstig hergestellt werden kann.

### Ausgestaltungen und Eigenschaften

Die vorliegende Offenbarung betrifft einen Dokumentenbuchumschlag für ein Wert- und Sicherheitsdokument sowie ein den Dokumentenbuchumschlag umfassendes buchartiges Wert- und Sicherheitsdokument. Als buchartiges Dokument bzw. als ein Dokument in der Form eines Buches wird jedwede gebundene oder anderweitig fixierte Zusammenfassung von Seiten verstanden. Insbesondere sind buchartige Wert- und Sicherheitsdokumente im Sinne der vorliegenden Offenbarung amtliche Passbücher, Reisepässe, Sparbücher oder dergleichen.

Um ein berührungsloses Auslesen von Daten aus einem derartigen Wert- und Sicherheitsdokument zu ermöglichen, umfasst der Dokumentbuchschlag die Transpondereinheit, aufweisend einen aus der Antenne und dem Chip bestehenden Transponder, die auf der Abdeckschicht angeordnet ist.

Die Abdeckschicht kann besonders Widerstandsfähig gegenüber von außen auf das Wert- und Sicherheitsdokument wirkenden thermischen, chemischen und mechanischen Beanspruchungen sein. Dadurch kann ein Schutz der in dem Wert- und Sicherheitsdokument aufzunehmenden Dokumentenseiten und der Transpondereinheit sichergestellt werde. Die Abdeckschicht kann ein- oder mehrschichtig ausgebildet sein und ein Material der Gruppe Papier oder ein Textilmaterial, wie zum Beispiel Baumwolle, umfassen. Die Dicke der Abdeckschicht kann zwischen 100 µm und 500 µm betragen. Um ein Auslesen von Daten aus der Transpondereinheit in einem geschlossenen Zustand des Wert- und Sicherheitsdokumentes zu verhindern, kann die Abdeckschicht ferner eine Abschirmschicht aufweisen, die in oder auf der Abdeckschicht angeordnet sein kann. Die Abschirmschicht kann eine Aluminiumfolie oder eine Folie mit metallischer Beschichtung umfassen.

Vorzugsweise umfasst die Abdeckschicht einen Falzbereich, der einen ersten und einen zweiten Bereich der Abdeckschicht verbindet. Der erste und zweite Bereich der Abdeckschicht können dabei eine erste und eine zweite Dokumentenhälfte des Wert- und Sicherheitsdokumentes festlegen. Entsprechend kann der Falzbereich einen Buchfalz des Wert- und Sicherheitsdokumentes definieren.

In dem Falzbereich kann die Abdeckschicht eine Vertiefung aufweisen. Dadurch kann die Biegesteifigkeit der Abdeckschicht im Falzbereich lokal verringert werden, um ein Zu- bzw. Aufklappen der beiden Dokumentenhälften zu vereinfachen. Die Vertiefung kann in Form einer Nut ausgebildet sein. In diesem Fall kann die Nut in dem Falzbereich durch ein Trennverfahren, insbesondere durch Spanen hergestellt sein. Alternativ kann die Vertiefung in Form einer Rille ausgebildet und durch ein Umformverfahren hergestellt sein. Weiterhin kann der Dokumentenbuchumschlag in der Vertiefung eine thermoplastische Schicht aufweisen, zum Beispiel aus einem thermoplastischen Elastomer, insbesondere aus thermoplastischem Polyurethan. Dies hat den vorteilhaften Effekt, dass eine Rissbildung und -ausbreitung in dem Falzbereich verhindert werden kann.

Die Transpondereinheit kann in Form von sogenannten Transponder-Inlays oder Smart Labels bereitgestellt sein. In dem vorliegenden Dokumentenbuchumschlag ist die Antennenträgerschicht der Transpondereinheit mit der Abdeckschicht verbunden. Zwischen der Abdeckschicht und der Antennenträgerschicht kann dabei eine erste Klebstoffschicht angeordnet sein. Die Antennenträgerschicht kann zumindest ein Material der Gruppe Polyethylenterephthalat (PET), PET-G, Papier, synthetisches Papier, Polyvinylchlorid (PVC), Polycarbon (PC) und dergleichen umfassen. Vorzugsweise weist die Antennenträgerschicht ein Material der Gruppe Papier und synthetisches Papier auf. Dies ermöglicht eine sehr flexibel ausgestaltete Transpondereinheit, d.h. eine Transpondereinheit mit einer geringen Biegesteifigkeit, die insbesondere auch im Bereich der Antennen und des Chips bruchfest und somit dauerhaft funktionsfähig ausgebildet sein kann. Die Dicke der Transpondereinheit kann zwischen 80 µm und 200 µm betragen.

Der Chip ist vorzugsweise ein ungehäuster Chip - ein sogenannter "bare die". In einer alternativen Ausführungsform kann es sich bei dem Chip um einen gehäusten Chip handeln, der in Form eines Chipmoduls bereitgestellt sein kann.

Die Antenne kann als Additivantenne, als Subtraktivantenne, als geätzte Antenne, als gedruckte Antenne oder als Drahtantenne auf der Antennenträgerschicht oder zumindest teilweise in dafür vorgesehenen Ausnehmungen auf der Oberfläche der Antennenträgerschicht angeordnet sein. Die Antenne kann zumindest zwei Antennenanschlüsse aufweisen, welche jeweils mit einem entsprechenden Anschluss des Chips elektrisch leitend verbunden sind. Ferner kann die Antennenträgerschicht eine weitere Ausnehmung aufweisen, in welcher der Chip angeordnet sein kann.

In einer Weiterentwicklung kann die Transpondereinheit ein Abdecksubstrat umfassen, welches in der Transpondereinheit gegenüberliegend zu der Antennenträgerschicht angeordnet sein kann. Das Abdecksubstrat kann eine Ausnehmung und/oder ein Durchgangsloch für die Aufnahme des Chips aufweisen. Dies ermöglicht eine Kompensation der Höhe des Chips, wodurch die Dicke der Transpondereinheit reduziert werden kann.

Der Dokumentenbuchumschlag umfasst weiterhin die Kompensationsschicht, die auf der Abdeckschicht derart angeordnet und mit dieser fest verbunden ist, dass die Transpondereinheit in dem Aufnahmeraum der Kompensationsschicht angeordnet ist. Die Kompensationsschicht ist dabei bevorzugt auf der Abdeckschicht in dem ersten Bereich und dem Falzbereich der Abdeckschicht angeordnet. Ferner kann die Kompensationssicht auf der Abdeckschicht in dem ersten Bereich oder in dem ersten Bereich, dem zweiten Bereich und dem Falzbereich der Abdeckschicht angeordnet sein. Die Abdeckschicht und die Kompensationsschicht können dabei mittels der ersten Klebstoffschicht, welche zwischen der Kompensationsschicht und der Abdeckschicht sowie zwischen der Transpondereinheit und der Abdeckschicht angeordnet sein kann, oder mittels einer zweiten Klebstoffschicht, die sich über die Abdeckschicht mit der darauf angeordneten Transpondereinheit erstreckt, fest verbunden sein.

Die von der Kompensationsschicht abgewandte Seite der ein- oder mehrschichtigen Abdeckschicht entspricht der Außenseite des Wert- oder Sicherheitsdokuments.

Die Kompensationsschicht kann eine Dicke von 50 µm bis 320 µm aufweisen und zumindest ein Material der Gruppe Papier und synthetisches Papier, wie zum Beispiel Teslin, umfassen. Vorzugsweise umfasst die Kompensationsschicht ein synthetisches Papier, das ein Matrixmaterial und ein Fasermaterial aufweist. Das Fasermaterial kann dabei Synthesefasern und Zellstofffasern umfassen. Die Kompensationsschicht kann ein Flächengewicht von 50 g/m² bis 350 g/m² aufweisen. Vorzugsweise weist die Kompensationsschicht jedoch ein Flächengewicht von etwa 150 g/m² auf.

Dies hat den vorteilhaften Effekt, dass die Kompensationsschicht eine hohe thermische und chemische Widerstandsfähigkeit aufweisen kann. Eine derartige Kompensationsschicht kann hohen Temperaturen standhalten, beispielsweise Temperaturen bis zu 180 °C. Weiterhin kann die Kompensationsschicht vorteilhafte mechanische Eigenschaften aufweisen. Im Speziellen kann die Kompensationsschicht eine hohe mechanische Widerstandsfähigkeit insbesondere gegenüber Zug-, Knick- und Scherbeanspruchungen aufweisen und dadurch einem Ein- und Durchreißen der Kompensationsschicht, d.h. einer Rissentstehung und -ausbildung, entgegenwirken. Gleichzeitig kann die Kompensationsschicht dabei eine geringe Widerstandsfähigkeit gegenüber Biegebeanspruchungen, d.h. eine geringe Biegesteifigkeit aufweisen und dadurch eine flexible Ausgestaltung der Wert- und Sicherheitsdokumente begünstigen. Weiterhin vorteilhaft ist, dass eine derartige Kompensationsschicht mittels Trennverfahren, wie zum Beispiel durch Spanen, insbesondere Fräsen, gut bearbeitet werden kann. Dadurch kann die Kompensationsschicht präzise mit dem Aufnahmeraum versehen werden.

Die Kompensationsschicht kann aus einer oder mehreren Schichten bestehen, wobei in diesem Fall zumindest eine Schicht mit einem gestanzten Fenster oder einer Vertiefung versehen ist, welche/s den Aufnahmeraum bildet.

In einer Variante kann die Kompensationsschicht genau aus zwei Schichten bestehen.

Der Aufnahmeraum der Kompensationsschicht, in dem die Transpondereinheit angeordnet ist, ist vorzugsweise an die Form und Größe der Transpondereinheit angepasst. Die Transpondereinheit kann hierbei derart in dem Aufnahmeraum angeordnet sein, dass diese zumindest mit Seitenwänden des Aufnahmeraums Stoff- und/oder kraftschlüssig verbunden ist.

In einer Weiterentwicklung kann der Aufnahmeraum in Form einer Aussparung ausgebildet sein, die sich von einer der Abdeckschicht zugewandten Seite der Kompensationsschicht in Dickenrichtung der Kompensationsschicht erstreckt. Die Tiefe der Aussparung kann 50% bis 80% der Dicke der Kompensationsschicht betragen. Die Transpondereinheit kann derart in der Aussparung aufgenommen sein, dass eine Transponderklebstoffschicht die Transpondereinheit mit den Seitenwänden und/oder einem Boden der Aussparung verbindet. Die Transponderklebstoffschicht kann eine Dicke aufweisen, die bevorzugt größer ist als die Dicke der Transpondereinheit.

Die Kompensationsschicht kann ein- oder mehrschichtig ausgebildet sein. Im Fall einer mehrschichtig ausgebildeten Kompensationsschicht kann die Aussparung mittels eines Durchgangslochs in einer äußeren Schicht der Kompensationsschicht ausgebildet sein.

In einer alternativen Ausführungsform kann der Aufnahmeraum in Form eines Durchgangslochs ausgebildet sein, das sich über die Dicke der Kompensationsschicht erstreckt. Ein derartiges Durchgangsloch kann beispielsweise durch Fräsen oder Stanzen hergestellt sein. Die Transpondereinheit kann dabei derart in dem Durchgangsloch aufgenommen sein, dass eine der Abdeckschicht abgewandte Seite der Transpondereinheit mit einer auf der Kompensationsschicht angeordneten Vorsatzpapierschicht verbunden ist.

In einer Weiterentwicklung kann der Dokumentenbuchumschlag die Vorsatzpapierschicht umfassen. Dabei kann vorgesehen sein, dass sich die Vorsatzpapierschicht über die Abdeckschicht mit der darauf angeordneten Kompensationsschicht erstreckt. Die Vorsatzpapierschicht kann mittels einer dritten Klebstoffschicht mit der Kompensationsschicht und/oder der Abdeckschicht fest verbunden sein. In einem Bereich, in dem die Kompensationsschicht nicht auf der Abdeckschicht angeordnet ist, wie beispielsweise in dem zweiten Bereich der Abdeckschicht, kann die dritte Klebstoffschicht dabei eine größere Dicke aufweisen.

Die verschiedenen Klebstoffschichten, wie zum Beispiel die erste bis dritte Klebstoffschicht und die Transponderklebstoffschicht, mittels derer die unterschiedlichen Schichten und Komponenten des vorliegenden Dokumentenbuchumschlags miteinander fest verbunden sein können, weisen vorzugsweise einen nicht wieder lösbaren Klebstoff auf. Ein derartiger Klebstoff kann dabei zumindest einen Dispersionsklebstoff auf Wasserbasis umfassen, wie beispielsweise eine Polyurethandispersion, eine 2-Komponenten-Dispersion, einen Dispersionsleim auf Basis von Polyvinylacetat (Weißleim) und dergleichen. Weiterhin können die vorliegenden Klebstoffschichten, insbesondere die Transponderklebstoffschicht, ein thermoplastisches Polyurethan und einen Polyurethan-Schmelzklebstoff umfassen.

In einer Weiterentwicklung ist die Haftkraft der Transponderklebstoffschicht uneinheitlich. Dies wird insbesondere durch die Verwendung unterschiedlicher Klebstoffe erreicht.

In einer Weiterentwicklung kann die Transpondereinheit zumindest eine Sollbruchstelle aufweisen. Hierzu kann die Transpondereinheit mit einer perforierten Antennenträgerschicht bereitgestellt sein. Eine derartige Ausgestaltung des vorliegenden Dokumentenbuchumschlags hat den vorteilhaften Effekt, dass ein Lösen der unterschiedlichen Schichten des Dokumentenbuchumschlags voneinander eine Zerstörung der Transpondereinheit bewirken kann. Dadurch kann eine unerwünschte Manipulation des Chips verhindert werden, wodurch der Dokumentenbuchumschlag einen erhöhten Schutz gegenüber Fälschungen aufweist.

Weiterhin wird ein Wert- und Sicherheitsdokument in der Form eines Buches vorgeschlagen. Das Wert- und Sicherheitsdokument umfasst den hier vorgeschlagenen Dokumentenbuchumschlag und Dokumentenseiten, die mit dem Dokumentenbuchumschlag verbunden sind. Der Dokumentenbuchumschlag kann alle vorangehend beschriebenen Merkmale aufweisen.

Die Dokumentenseiten können mit der Vorsatzpapierschicht oder mit der Vorsatzpapierschicht und der Kompensationsschicht des Dokumentenbuchumschlags kraft- und/oder stoffschlüssig verbunden sein. Insbesondere können diese im Bereich des Buchfalzes mittels eines Bindefadens entlang einer Naht miteinander verbunden sein.

Hier wird ferner ein Verfahren zum Herstellen eines Dokumentenbuchumschlags für ein Wert- und Sicherheitsdokument vorgeschlagen. Das Verfahren umfasst einen Schritt des Bereitstellens einer Transpondereinheit, die eine Antennenträgerschicht, eine Antenne und einen die Antenne kontaktierenden Chip aufweist. Weiterhin erfolgt ein Anordnen der Transpondereinheit in einem Aufnahmeraum einer Kompensationsschicht. Ferner umfasst das Verfahren ein Anordnen der Transpondereinheit auf einer Abdeckschicht. Das Anordnen erfolgt dabei derart, dass eine erste Seite der Antennenträgerschicht der Transpondereinheit auf der Abdeckschicht anliegt, wobei die Antenne und der Chip auf einer der ersten Seite entgegengesetzten zweiten Seite der Antennenträgerschicht angeordnet sind. Schließlich wird die Kompensationsschicht auf der Abdeckschicht angeordnet.

Das Verfahren kann ferner folgende Schritte aufweisen:
- Anordnen einer ersten Klebstoffschicht auf der Abdeckschicht;
- Anordnen einer zweiten Klebstoffschicht auf der Transpondereinheit oder auf der Abdeckschicht mit der darauf angeordneten Transpondereinheit ;
- Anordnen einer dritten Klebstoffschicht auf einer der Abdeckschicht abgewandten Seite der Kompensationsschicht; und/oder
- Anordnen einer Vorsatzpapierschicht auf der Abdeckschicht mit der darauf angeordneten Kompensationsschicht.

Des Weiteren kann das Verfahren einen Schritt des Bereitstellens eines Trägersubstrats umfassen, auf dem zumindest die eine Transpondereinheit angeordnet ist. Das Bereitstellen des Trägersubstrats kann dabei durch Abwickeln desselben in einer Abwickelrichtung von einer ersten Vorratsrolle erfolgen, wobei das Bereitstellen der Transpondereinheit durch Abtrennen derselben von dem Trägersubstrat erfolgen kann. Zusätzlich oder alternativ kann die Abdeckschicht durch Abwickeln einer Abdeckschichtbahn in der Abwickelrichtung von einer zweiten Vorratsrolle bereitgestellt werden. Ferner kann ein Bereitstellen der Kompensationsschicht durch Abwickeln einer Kompensationsschichtbahn von einer dritten Vorratsrolle erfolgen. In dieser Ausführungsform kann der Schritt des Anordnens der Kompensationsschicht auf der Abdeckschicht durch Anordnen der Kompensationsschichtbahn auf der Abdeckschichtbahn erfolgen. In einem weiteren Schritt kann ein Vereinzeln und/oder Zuschneiden des Dokumentenbuchumschlags erfolgen, indem die Abdeckschicht und/oder die Kompensationsschicht von der Abdeckschichtbahn und/oder der Kompensationsschichtbahn quer zu der Abwickelrichtung abgetrennt werden/wird. In einer alternativen Ausführungsform können/kann die Transpondereinheit, die Abdeckschicht und/oder die Kompensationsschicht im Bogenformat bereitgestellt werden.

### Kurzbeschreibung der Zeichnung

Weitere Ziele, Merkmale, Vorteile und Anwendungsmöglichkeiten ergeben sich aus der nachfolgenden Beschreibung aus nicht einschränkend zu verstehenden Ausführungsbeispielen und den zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbezügen.
- Fig. 1: zeigt eine schematische Querschnittsansicht einer ersten Ausführungsform eines Dokumentenbuchumschlags.
- Fig. 2: zeigt eine schematische Querschnittsansicht einer zweiten Ausführungsform des Dokumentenbuchumschlags.
- Fig. 3-5: zeigen schematische Explosionsdarstellungen in einer Querschnittsansicht eines Wert- und Sicherheitsdokumentes in unterschiedlichen Ausführungsformen, wobei das Wert- und Sicherheitsdokument einen Dokumentenbuchumschlag der ersten Ausführungsform umfasst.
- Fig. 6-7: zeigen schematische Explosionsdarstellungen in einer Querschnittsansicht eines Wert- und Sicherheitsdokumentes in unterschiedlichen Ausführungsformen, wobei das Wert- und Sicherheitsdokument einen Dokumentenbuchumschlag der zweiten Ausführungsform umfasst.
- Fig. 8a-8d: zeigen perspektivische Darstellungen einzelner Verfahrensschritte zum Herstellen des Dokumentbuchumschlags der ersten Ausführungsform.

### Detaillierte Beschreibung von Ausführungsvarianten

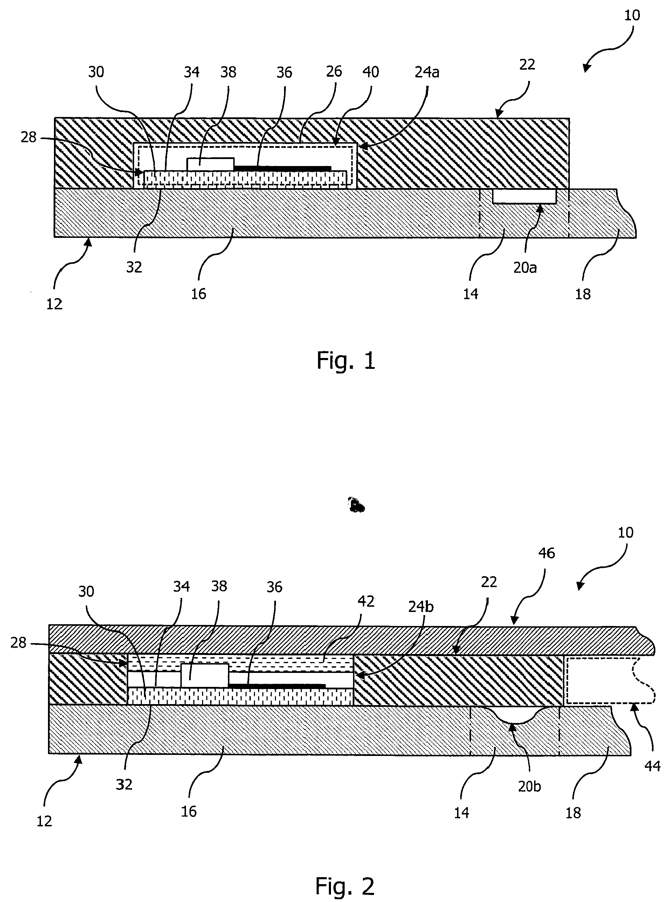

Fig. 1 zeigt den schematischen Aufbau einer ersten Ausführungsform eines Dokumentbuchumschlags 10 für ein Wert- und Sicherheitsdokument in der Form eines Buches. Der Dokumentenbuchumschlag 10 umfasst eine Abdeckschicht 12 mit einem im Wesentlichen mittig angeordneten Falzbereich 14. Angrenzend zu einer ersten Seite des Falzbereichs 14 weist die Abdeckschicht 12 weiterhin einen ersten Bereich 16 auf, der eine erste Dokumentenhälfte des Wert- und Sicherheitsdokumentes festlegt. An einer der ersten Seite entgegengesetzten Seite des Falzbereichs 14 grenzt dieser an einen zweiten Bereich 18 der Abdeckschicht 12 an. Durch den zweiten Bereich 18 ist dabei eine zweite Dokumentenhälfte des Wert- und Sicherheitsdokumentes festgelegt. In Fig. 1 ist der zweite Bereich 18 nur abschnittsweise gezeigt. Wie in Fig. 1 angedeutet, erstreckt sich der zweite Bereich 18 jedoch weiter in einer dem Falzbereich 14 abgewandten Richtung und kann im Wesentlichen in seiner Form und Größe an den ersten Bereich 16 angepasst sein. In dem Falzbereich 14 ist die Abdeckschicht 12 mit einer Vertiefung in Form einer Nut 20a versehen. In der Nut 20a kann ferner eine thermoplastische Polyurethanschicht angeordnet sein.

Der Dokumentenbuchumschlag 10 umfasst weiterhin eine Kompensationsschicht 22, welche auf der Abdecksicht 12 angeordnet und mit dieser fest verbunden ist. Die Kompensationsschicht 22 erstreckt sich hierbei über den ersten Bereich 16 und den Falzbereich 14 der Abdeckschicht 12. In einer alternativen Ausführungsform kann sich die Kompensationsschicht 22 weiterhin über den zweiten Bereich 18 der Abdeckschicht 12 erstrecken. Demgegenüber kann sich die Kompensationsschicht 22 alternativ lediglich über den ersten Bereich 16 der Abdeckschicht 12 erstrecken. Die Kompensationsschicht 22 ist mit einer Aussparung 24a versehen, welche sich von einer der Abdeckschicht 12 zugewandten Seite der Kompensationsschicht 22 in Dickenrichtung derselben erstreckt. Die Aussparung 24a weist einen Aussparungsboden 26 auf und kann quaderförmig, zylindrisch oder in einer anderen Form ausgebildet sein.

Eine Transpondereinheit 28 ist in der Aussparung 24a angeordnet und umfasst eine Antennenträgerschicht 30 mit einer ersten Seite 32 und einer zweiten Seite 34, eine Antenne 36 und einen Chip 38. In dieser Ausführungsform des Dokumentenbuchumschlags 10 ist der Chip 38 vorzugsweise in Form eines ungehäusten Chips bereitgestellt. Die erste Seite 32 der Antennenträgerschicht 30 liegt auf der Abdeckschicht 12 auf und ist mit dieser fest verbunden. Auf der zweiten Seite 34 der Antennenträgerschicht 30 sind die Antenne 36 und der Chip 38 angeordnet, wobei die Antenne 36 und der Chip 38 elektrisch leitend miteinander verbunden sind. Die Transpondereinheit 28 ist mittels einer Transponderklebstoffschicht 40 mit Seitenwänden der Aussparung 24a und dem Aussparungsboden 26 fest verbunden. Die Dicke der Transponderklebstoffschicht 40 ist dabei größer als die Dicke der Transpondereinheit 28.

Bei den im Folgenden beschriebenen weiteren Ausführungsformen werden für gleichartige bzw. gleich wirkende Komponenten die gleichen Bezugszeichen wie bei der vorstehend

beschriebenen Ausführungsform verwendet. Die Komponenten, die in den weiteren Ausführungsformen nicht erneut beschrieben sind, stimmen in ihren Merkmalen mit den Komponenten der vorangehend beschriebenen Ausführungsform überein.

Fig. 2 zeigt den schematischen Aufbau einer zweiten Ausführungsform des Dokumentbuchumschlags 10. Die Abdeckschicht 12 weist hierbei in dem Falzbereich 14 eine Vertiefung auf, die in Form einer Rille 20b bereitgestellt ist. Weiterhin unterscheidet sich diese Ausführungsform gegenüber der in Fig. 1 gezeigten Ausführungsform darin, dass der Aufnahmeraum der Kompensationsschicht 22 in Form einer Durchgangsbohrung 24b ausgebildet ist. Die darin aufgenommene Transpondereinheit 28 umfasst dabei weiterhin ein Abdecksubstrat 42, das in der Transpondereinheit 28 gegenüberliegend zu der Antennenträgerschicht 30 angeordnet ist. Das Abdecksubstrat 42 ist mit einer Ausnehmung für den Chip 38 versehen, welcher darin teilweise aufgenommen ist und in Form eines gehäusten Chips bereitgestellt sein kann.

In der gezeigten Ausführungsform kann die Transpondereinheit 28 derart in dem Durchgangsloch 24b angeordnet sein, dass diese mit der Kompensationsschicht 22 kraftschlüssig verbunden ist. Alternativ oder zusätzlich kann die Transponderklebstoffschicht 40 bereitgestellt sein, welche die Transpondereinheit 28 mit den Seitenwänden des Durchgangslochs 24b stoffschlüssig verbindet.

In einer Ausführungsform ist die Haftkraft der Transponderklebstoffschicht 40 zwischen der Transpondereinheit 28 und dem Aussparungsboden 26 größer als Haftkraft zwischen dem/der Transponderinlay/Kompensationsschicht 22 und der Abdeckschicht 12. Dies wird insbesondere durch die Verwendung verschiedener Klebstoffe für die Transponderklebstoffschicht 40 erreicht.

In einer Ausführungsform ist die Haftkraft der Transponderklebstoffschicht 40 zwischen der Transpondereinheit 28 und dem Abdecksubstrat 42 größer als Haftkraft zwischen dem/der Transponderinlay/Kompensationsschicht 22 und der Abdeckschicht 12. Dies wird insbesondere durch die Verwendung verschiedener Klebstoffe für die Transponderklebstoffschicht 40 erreicht.
Der Dokumentenbuchumschlag 10 umfasst weiterhin eine Klebstoffschicht 44, welche auf der Abdeckschicht 12 in dem zweiten Bereich 18 angeordnet ist. Die Klebstoffschicht 44 weist dabei eine Dicke auf, die im Wesentlichen der Dicke der Kompensationsschicht 22 entspricht. Auf der Kompensationsschicht 22 und der Klebstoffschicht 44 ist weiterhin eine Vorsatzpapierschicht 46 derart bereitgestellt, dass diese gegenüberliegend zur Abdeckschicht 12 in dem Dokumentenbuchumschlag 10 angeordnet ist. Die Vorsatzpapierschicht 46 weist dabei einen im Wesentlichen konstanten Abstand zu dem ersten und zweiten Bereich 16, 18 der Abdeckschicht 12 auf.

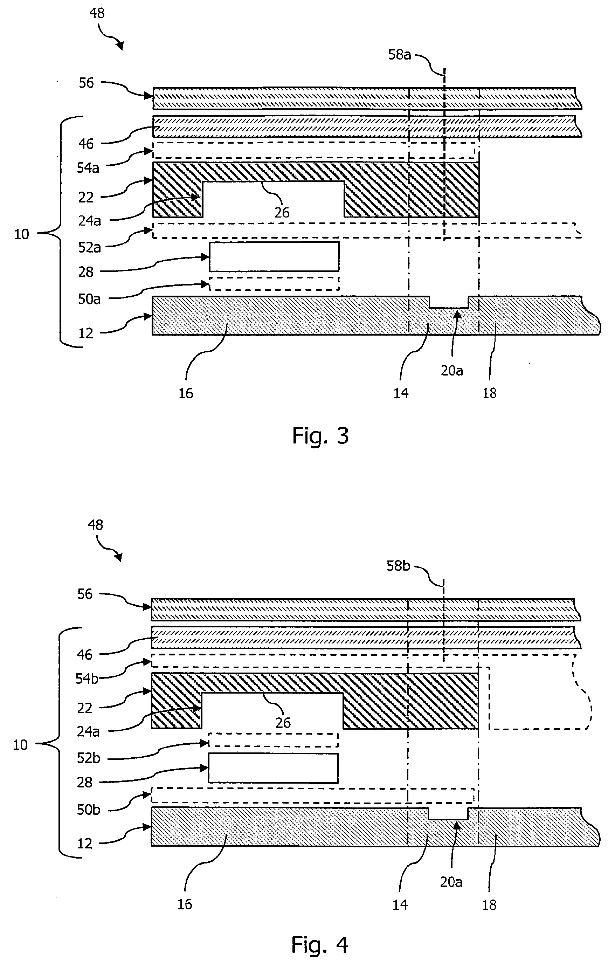

Fig. 3 zeigt eine erste Ausführungsform eines Wert- und Sicherheitsdokumentes 48 als Explosionsdarstellung in einer schematischen Querschnittsansicht. Das Wert- und Sicherheitsdokument 48 ist in einem aufgeklappten Zustand gezeigt, in welchem die Dokumentenhälften im Wesentlichen parallel zueinander und in gleicher Höhe angeordnet sind. Das Wert- und Sicherheitsdokument 48 umfasst den Dokumentenbuchumschlag 10 der ersten Ausführungsform aus Fig. 1.

Wie in Fig. 3 gezeigt, umfasst der Dokumentenbuchumschlag 10 eine erste Klebstoffschicht 50a, die zwischen der Transpondereinheit 28 und der Abdeckschicht 12 angeordnet ist und diese miteinander fest verbindet. Zwischen der Kompensationsschicht 22 und der Abdeckschicht 12 mit der darauf angeordneten Transpondereinheit 28 ist der Dokumentbuchumschlag mit einer zweiten Klebstoffschicht 52a versehen. Die zweite Klebstoffschicht 52a erstreckt sich hierbei weiterhin über den zweiten Bereich 18 der Abdeckschicht 12, sodass die Abdeckschicht 12 mit der Kompensationsschicht 22 und der Vorsatzpapierschicht 46 fest verbunden ist. Zwischen der Kompensationsschicht 22 und der Vorsatzpapierschicht 46 umfasst der Dokumentenbuchumschlag 10 eine dritte Klebstoffschicht 54a, mittels derer die beiden Schichten miteinander verbunden fest sind.

Das Wert- und Sicherheitsdokument 48 umfasst weiterhin Dokumentenseiten 56, die auf der Vorsatzpapierschicht 46 und gegenüberliegend zur Abdeckschicht 12 in dem Wert- und Sicherheitsdokument 48 angeordnet sind. Die Dokumentenseiten 56 sind im Bereich des Buchfalzes mit der Vorsatzpapierschicht 46 und der Kompensationsschicht 22 entlang einer Naht 58a mittels eines Bindefadens miteinander vernäht und dadurch kraftschlüssig verbunden sind.

In Fig. 4 ist eine zweite Ausführungsform des Wert- und Sicherheitsdokumentes 48 als Explosionsdarstellung in einer schematischen Querschnittsansicht gezeigt. In dieser Ausführungsform ist die erste Klebstoffschicht 50b zwischen der Abdeckschicht 12 und der Transpondereinheit 28 sowie zwischen der Abdeckschicht 12 und der Kompensationsschicht 22 angeordnet. Demgegenüber erstreckt sich die zweite Klebstoffschicht 52b über eine der Kompensationsschicht 22 zugewandte Seite der Transpondereinheit 28 und ist somit zwischen dem Aussparungsboden 26 und der Transpondereinheit 28 angeordnet. Die dritte Klebstoffschicht 54b ist sowohl zwischen der Vorsatzpapierschicht 46 und der Kompensationsschicht 22 als auch zwischen der Vorsatzpapierschicht 46 und dem zweiten Bereich 18 der Abdeckschicht 12 angeordnet. Im Bereich des zweiten Bereichs 18 der Abdeckschicht 12, weist die dritte Klebstoffschicht 54b eine größere Dicke auf als im Bereich der Kompensationsschicht 22, sodass die Vorsatzpapierschicht 46 in dem ersten und zweiten Bereich 16, 18 der Abdeckschicht 12 einen im Wesentlichen konstanten Abstand zu der Abdeckschicht 12 aufweist.

In der in Fig. 4 gezeigten Ausführungsform des Wert- und Sicherheitsdokumentes 48 sind die Dokumentenseiten 56 entlang der Naht 58b mit der Vorsatzpapierschicht 46 und nicht wie in der in Fig. 3 gezeigten ersten Ausführungsform mit der Vorsatzpapierschicht 46 und der Kompensationsschicht 22 verbunden.

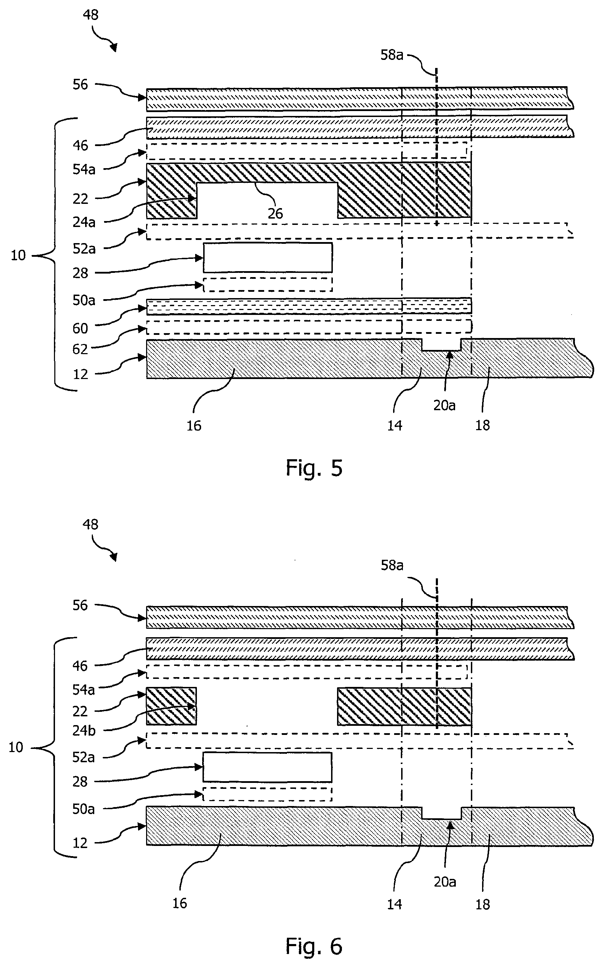

In Fig. 5 ist eine dritte Ausführungsform des Wert- und Sicherheitsdokumentes 48 als Explosionsdarstellung in einer schematischen Querschnittsansicht gezeigt. Der Dokumentenbuchumschlag 10 umfasst hierbei weiterhin eine Abschirmschicht 60, die sich zwischen der Kompensationsschicht 22 und der Abdeckschicht 12 erstreckt. Die Abschirmschicht 60 ist dabei mittels einer vierten Klebstoffschicht 62 mit der Abdeckschicht 12 fest verbunden. Die Abschirmschicht 60 weist bevorzugt eine Aluminiumfolie auf, die dazu eingerichtet ist, ein berührungsloses Auslesen von Daten aus der Transpondereinheit 28 in Richtung der ersten Passhälfte zu verhindern.

In einer Ausführungsform ist die Abschirmschicht 60 ausschließlich im zweiten Bereich 18 angeordnet. In dieser Ausführungsform weist die Kompensationsschicht 22 im ersten Bereich 16 eine größere Dicke als im zweiten Bereich 18 auf.

In einer weiteren Ausführungsform entspricht die Dicke der Kompensationsschicht 22 im ersten Bereich 16 der zusammengenommenen Dicken der Kompensationsschicht und der Abdeckschicht im zweiten Bereich 18.

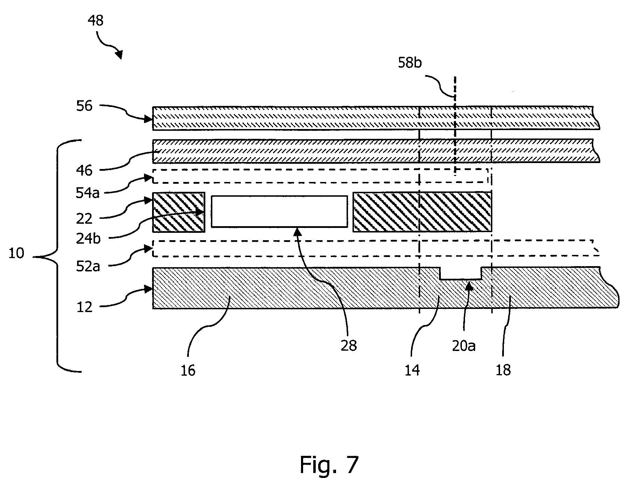

In einer Ausführungsform erstreckt sich die Abschirmschicht 60 über den ersten Bereich 16 und den zweiten Bereich 18, jedoch nicht über den Falzbereich 14. Fig. 6 und 7 zeigen weitere Ausführungsformen von Wert- und Sicherheitsdokumenten 48, die den Dokumentenbuchumschlag 10 der zweiten Ausführungsform aus Fig. 2, aufweisend das Durchgangsloch 24b, umfassen. In den darin gezeigten Wert- und Sicherheitsdokumenten 48 ist die Transpondereinheit 28 mittels der zweiten Klebstoffschicht 52a und/oder der dritten Klebstoffschicht 54a mit der Vorsatzpapierschicht 46 fest verbunden.

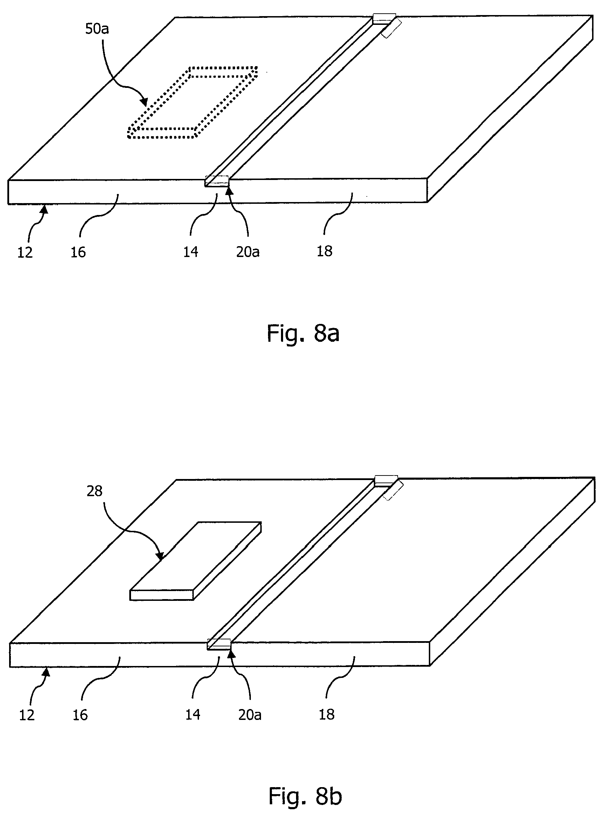

Ein Verfahren zum Herstellen des Dokumentenbuchumschlages 10 ist im Folgenden in Verbindung mit den Fig. 8a-d beschrieben, die beispielhaft einzelne Verfahrensschritte zur Herstellung des Dokumentbuchumschlags 10 der ersten Ausführungsform aus Fig. 1 zeigen.

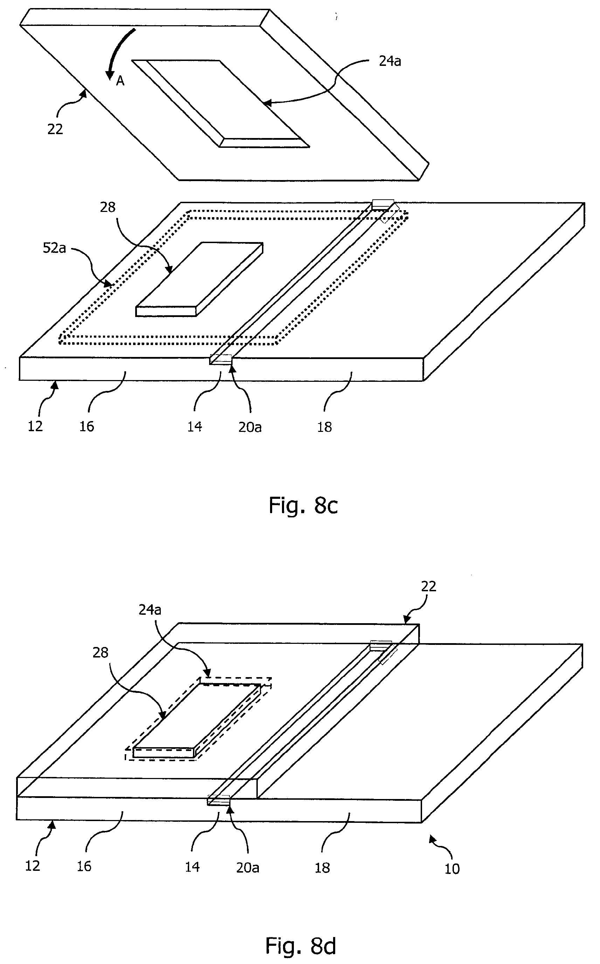

Fig. 8a zeigt einen ersten Schritt des Verfahrens, in dem eine erste Klebstoffschicht 50a auf einer Abdeckschicht 12 angeordnet wird. Daraufhin wird gemäß Fig. 8b eine Transpondereinheit 28, aufweisend eine Antennenträgerschicht 30, eine Antenne 36 und einen die Antenne 36 kontaktierenden Chip 38, derart auf die Abdeckschicht 12 mit der darauf aufgetragenen ersten Klebstoffschicht 50a angeordnet, dass eine erste Seite 32 der Antennenträgerschicht 30 auf der Abdeckschicht 12 anliegt und mit dieser fest verbunden wird. Demgegenüber sind auf einer der ersten Seite 32 gegenüberliegenden zweiten Seite 34 der Antennenträgerschicht 30 die Antenne 36 und der Chip 38 angeordnet. Wie in Fig. 8c gezeigt, erfolgt daraufhin ein Bereitstellen einer Kompensationsschicht 22, die mit einer Aussparung 24a versehen ist. In einem nächsten Schritt wird auf die Abdeckschicht 12 mit der drauf angeordneten Transpondereinheit 28 eine zweite Klebstoffschicht 52a aufgetragen. Wie durch den Pfeil A in Fig. 8c angedeutet, wird die Kompensationsschicht 22 schließlich derart auf der Abdeckschicht 12 angeordnet und mit dieser verbunden, dass, wie in Fig. 8d gezeigt, die Transpondereinheit 28 in der Aussparung 24a aufgenommen wird.

In allen gezeigten Varianten der Fig. 1 - 8d bildet die Abdeckschicht 12, genauer gesagt deren dem Aufnahmeraum 24a, 24b abgewandte Seite die Außenseite des Dokumentenbuchumschlags 10.

## Patentansprüche

1. Dokumentenbuchumschlag (10) geeignet für ein Wert- und Sicherheitsdokument (48), der umfasst:
- eine Abdeckschicht (12);
- eine Transpondereinheit (28), die eine Antennenträgerschicht (30), eine Antenne (36) und einen die Antenne (36) kontaktierenden Chip (38) aufweist, wobei
eine erste Seite (32) der Antennenträgerschicht (30) mit der Abdeckschicht (12) verbunden ist, und wobei
die Antenne (36) und der Chip (38) auf einer der ersten Seite (32) entgegengesetzten zweiten Seite (34) der Antennenträgerschicht (30) angeordnet sind; und
- eine Kompensationsschicht (22), die mit einem Aufnahmeraum (24a; 24b) versehen ist, welcher sich von einer der Abdeckschicht (12) zugewandten Seite der Kompensationsschicht (22) in Dickenrichtung derselben erstreckt, wobei
die Transpondereinheit (28) in dem Aufnahmeraum (24a; 24b) angeordnet ist, wobei
die Kompensationsschicht (22) mit der Abdeckschicht (12) verbunden ist, und wobei
die Kompensationsschicht (22) und/oder die Antennenträgerschicht (30) zumindest ein Material der Gruppe Papier und synthetisches Papier aufweisen.

2. Dokumentenbuchumschlag nach Anspruch 1, wobei die Abdeckschicht (12) die Außenseite des Dokumentenbuchumschlages (10) bildet.

3. Dokumentenbuchumschlag nach Anspruch 1 oder 2, wobei die Kompensationsschicht (22) synthetisches Papier mit einem Matrixmaterial und einem Fasermaterial aufweist, wobei das Fasermaterial Synthesefasern und Zellstofffasern umfasst.

4. Dokumentenbuchumschlag nach einem der vorangegangenen Ansprüche, wobei der Aufnahmeraum (24a; 24b) an die Form und Größe der Transpondereinheit (28) angepasst ist, und/oder
die Transpondereinheit (28) in dem Aufnahmeraum (24a; 24b) mit der Kompensationsschicht (22) stoff- und/oder kraftschlüssig verbunden ist.

5. Dokumentenbuchumschlag nach einem der vorangegangenen Ansprüche, wobei die Abdeckschicht (12) einen Falzbereich (14) und einen zum Falzbereich (14) angrenzenden ersten Bereich (16) aufweist, und wobei
die Kompensationsschicht (22) auf der Abdeckschicht (12) zumindest in dem ersten Bereich (16) und dem Falzbereich (14) angeordnet ist.

6. Dokumentenbuchumschlag nach einem der vorangegangenen Ansprüche, wobei der Dokumentenbuchumschlag (10) ferner eine Vorsatzpapierschicht (46) aufweist, die sich über die Abdeckschicht (12) mit der darauf angeordneten Kompensationsschicht (22) erstreckt.

7. Dokumentenbuchumschlag nach einem der vorangegangenen Ansprüche, wobei der Aufnahmeraum (24a; 24b) in Form einer Aussparung (24a) ausgebildet ist, die sich in Dickenrichtung der Kompensationsschicht (22) erstreckt, wobei die Aussparung (24a) eine Tiefe von 50% bis 80% der Dicke der Kompensationsschicht (22) aufweist, oder wobei
der Aufnahmeraum (24a; 24b) in Form eines Durchgangslochs (24b) ausgebildet ist, das sich über eine Dicke der Kompensationsschicht (22) erstreckt.

8. Dokumentenbuchumschlag nach Anspruch 7, wobei eine der Abdeckschicht (12) abgewandte Seite der Transpondereinheit (28) mit einem Boden (26) der Aussparung (24a) oder mit der auf der Kompensationsschicht (22) angeordneten Vorsatzpapierschicht (46) verbunden ist.

9. Dokumentenbuchumschlag nach Anspruch 7 und 8, wobei die Transpondereinheit (28) zumindest eine Sollbruchstelle aufweist.

10. Dokumentenbuchumschlag nach einem der Ansprüche 5 bis 9, wobei die Abdeckschicht (12) im Falzbereich (14) mit einer Vertiefung (20a; 20b) versehen ist, wobei sich die Vertiefung (20a; 20b) von einer der Kompensationsschicht (22) zugewandten Seite der Abdeckschicht (12) in Dickenrichtung der Abdeckschicht (12) erstreckt, und wobei
die Vertiefung (20a; 20b) in Form einer Nut (20a) oder Rille (20b) ausgebildet ist.

11. Wert- und Sicherheitsdokument (48), insbesondere ein Reisepass, das aufweist:
- einen Dokumentenbuchumschlag (10) nach einem der Ansprüche 1 bis 10; und
- Dokumentenseiten (56), die mit dem Dokumentenbuchumschlag (10) verbunden sind.

12. Wert- und Sicherheitsdokument nach Anspruch 11, wobei die Dokumentenseiten (56) mit der Vorsatzpapierschicht (46) oder mit der Vorsatzpapierschicht (46) und der Kompensationsschicht (22) im Bereich eines Buchfalzes des Wert- und Sicherheitsdokumentes (48) verbunden sind.

13. Verfahren zum Herstellen eines Dokumentenbuchumschlags für ein Wert- und Sicherheitsdokument, das die Schritte umfasst:
- Bereitstellen einer Transpondereinheit (28), die eine Antennenträgerschicht (30), eine Antenne (36) und einen die Antenne (36) kontaktierenden Chip (38) aufweist;
- Anordnen der Transpondereinheit (28) in einem Aufnahmeraum (24a; 24b) einer Kompensationsschicht (22);
- Anordnen der Transpondereinheit (28) auf einer Abdeckschicht (12), derart, dass eine erste Seite (32) der Antennenträgerschicht (30) der Transpondereinheit (28) auf der Abdeckschicht (12) anliegt, wobei die Antenne (36) und der Chip (38) auf einer der ersten Seite (32) entgegengesetzten zweiten Seite (34) der Antennenträgerschicht (30) angeordnet sind; und
- Anordnen der Kompensationsschicht (22) auf der Abdeckschicht (12), sodass sich der Aufnahmeraum (24a; 24b) von einer der Abdeckschicht (12) zugewandten Seite der Kompensationsschicht (22) in Dickenrichtung derselben erstreckt.

14. Verfahren zum Herstellen eines Dokumentenbuchumschlags nach Anspruch 12, wobei das Verfahren ferner die Schritte umfasst:
- Anordnen einer ersten Klebstoffschicht (50a; 50b) auf der Abdeckschicht (12);
- Anordnen einer zweiten Klebstoffschicht (52a; 52b) auf der Transpondereinheit (28) oder auf der Abdeckschicht (12) mit der darauf angeordneten Transpondereinheit (28);
- Anordnen einer dritten Klebstoffschicht (54a; 54b) auf einer der Abdeckschicht (12) abgewandten Seite der Kompensationsschicht (22); und/oder
- Anordnen einer Vorsatzpapierschicht (46) auf der Abdeckschicht (12) mit der darauf angeordneten Kompensationsschicht (22).

15. Verfahren zum Herstellen eines Dokumentenbuchumschlags nach Anspruch 12 oder 13, wobei das Verfahren ferner die Schritte umfasst:
- Abwickeln eines Trägersubstrats in einer Abwickelrichtung von einer ersten Vorratsrolle, wobei auf dem Trägersubstrat zumindest die eine Transpondereinheit (28) angeordnet ist, und wobei das Bereitstellen der Transpondereinheit (28) durch Abtrennen derselben von dem Trägersubstrat erfolgt;
- Bereitstellen der Abdeckschicht (12) durch Abwickeln einer Abdeckschichtbahn in der Abwickelrichtung von einer zweiten Vorratsrolle;
- Bereitstellen der Kompensationsschicht (22) durch Abwickeln einer Kompensationsschichtbahn in der Abwickelrichtung von einer dritten Vorratsrolle;
- Anordnen der Kompensationsschichtbahn auf der Abdeckschichtbahn; und/oder
- Vereinzeln und/oder Zuschneiden des Dokumentenbuchumschlags (10), indem die Abdeckschicht (12) und/oder die Kompensationsschicht (22) von der Abdeckschichtbahn und/oder der Kompensationsschichtbahn quer zu der Abwickelrichtung abgetrennt werden/wird.
